# DEMANDE DE BREVET EUROPEEN

(11) **EP 3 309 422 A1**
(43) Date de publication de la demande: **18.04.2018**
(21) Numéro de dépôt: 17190984.9
(22) Date de dépôt: 14.09.2017
(51) Int. Cl.: F16D 13/72

(54) **VOLANT MOTEUR REFROIDI**

(30) Priorité: 13.10.2016 FR 1659886
(71) Demandeur: PSA Automobiles SA, 78300 Poissy (FR)
(72) Inventeur: PREVOST, Christophe, 51700 COURTHIEZY (FR); PETIT, Benjamin, 92500 RUEIL MALMAISON (FR)

(57) **Abrégé**

Ce volant à inertie (1) d'un moteur thermique d'un véhicule comporte un anneau d'inertie (2) comprenant un moyen de refroidissement. Ce moyen de refroidissement comprend des canaux de refroidissement (3) par centrifugation d'air traversant l'anneau (2), les canaux (3) comprenant une section de passage d'air et des moyens thermosensibles (4) de variation de cette section, les moyens thermosensibles (4) fermant ces sections lorsqu'une température des moyens thermosensibles (4) est en dessous d'un seuil de température bas.

## Description

L'invention a trait au domaine des groupes motopropulseurs de véhicules automobiles. Plus particulièrement encore, l'invention concerne le refroidissement d'embrayages secs, notamment le refroidissement d'un volant moteur couplé à cet embrayage.

Un embrayage est un système mécanique assurant un couplage entre un moteur thermique et une boîte de vitesses (mécanique ou pilotée). Il comprend à cet effet un volant moteur, au moins un disque de friction (ou d'embrayage), et un mécanisme de pression (comportant au moins un plateau presseur et une cloche d'embrayage ou couvercle, ainsi qu'un éventuel diaphragme). Le volant moteur (qui peut être simple ou double) est destiné à être solidarisé à un arbre du moteur thermique, par exemple son vilebrequin. Le disque de friction est destiné à être solidarisé à un arbre primaire de la boîte de vitesses. Le plateau de pression (du mécanisme de pression) est chargé de plaquer le disque de friction contre le volant moteur lorsqu'il est poussé par un organe tel qu'un diaphragme sous l'action d'une butée, elle-même actionnée par une commande d'embrayage. Le couvercle (du mécanisme de pression) permet de solidariser fixement ce dernier au volant moteur. Le mécanisme de pression comprend dans son couvercle et/ou dans son éventuel diaphragme des premières ouvertures pour l'entrée d'air et des ouvertures périphériques pour la sortie de cet air au voisinage de la jonction volant moteur / couvercle.

Le couple qui est produit par le moteur thermique est tout d'abord transmis au volant moteur via le vilebrequin (grâce à son mouvement de rotation), puis au disque de friction et enfin à l'arbre primaire de la boîte de vitesses.

Comme le sait l'homme de l'art, dans certaines situations de vie, l'augmentation de la température des pièces de l'embrayage qui sont impliquées dans la friction (mécanisme de pression, volant moteur et disque de friction) peut dépasser un seuil haut au-delà duquel on observe une dégradation de la transmission du couple, voire une détérioration de certaines pièces, nécessitant de prévoir leur refroidissement.

Or ces pièces sont peu accessibles, et confinées entre le moteur et la boîte de vitesses, rendant leur refroidissement peu aisé car la circulation d'air y est limitée.

Cette difficulté s'avère d'autant plus problématique lorsque l'on souhaite obtenir un allongement des rapports de la boîte de vitesses, notamment dans le but de réduire la consommation d'énergie (et donc la production de CO₂). En effet, l'allongement de ces rapports conduit à une plus grande sollicitation de l'embrayage, ce qui impose un renforcement de ses pièces et une adaptation des formes de ces dernières qu'il est de plus en plus difficile d'obtenir.

A l'inverse, lorsque la température des pièces de l'embrayage qui sont impliquées dans la friction (mécanisme de pression, volant moteur et disque de friction) est en dessous d'un seuil bas (par exemple, en situation de roulage dans des conditions climatiques froides ou après un arrêt prolongé), on observe une limitation de la transmission du couple par un phénomène de patinage à froid du disque de friction.

Le brevet FR-B-2 974 868 divulgue une stratégie de protection thermique intégrée de façon logicielle soit dans le calculateur supervisant le moteur thermique (et généralement appelé « Contrôle Moteur Multifonction » (ou CMM)) lorsque la boîte de vitesses est de type manuel, soit dans l'actionneur de la boîte de vitesses lorsque cette dernière est pilotée. Elle prend en compte la mesure de la température du plateau de pression, laquelle est estimée en continu durant toute la vie du véhicule. Lorsque certains seuils de température sont atteints, des protections sont mises en place, par exemple par activation du groupe moto-ventilateur et/ou modification de la cartographie d'enfoncement de la pédale d'accélérateur, pour tenter de diminuer la température du plateau de pression.

Cette solution permet de prolonger temporairement une utilisation abusive de l'embrayage et donc de réduire légèrement la température de l'air à l'intérieur du carter, mais limite les performances du véhicule et améliore peu le refroidissement des pièces de l'embrayage qui sont impliquées dans la friction, car le groupe moto-ventilateur reste un moyen de refroidissement externe à l'embrayage.

Le brevet FR-B-2 806 766 divulgue un volant présentant une surface de friction globalement annulaire, dans lequel le volant, au moins radialement à l'intérieur de la garniture de friction, est équipé d'aubes de façon à produire, lors de sa rotation, un flux d'air qui s'écoule le long de sa face opposée à la garniture de friction.

Cette solution permet un refroidissement efficace du volant moteur, mais elle ne permet pas de s'adapter aux situations de roulage dans des conditions climatiques froides, ce refroidissement étant lié en permanence à la rotation du volant moteur.

Il y a donc un besoin pour avoir un refroidissement efficace quand la température des pièces de l'embrayage qui sont impliquées dans la friction dépasse le seuil haut, et qui satisfasse également aux conditions climatiques froides.

L'invention a pour objectif de proposer un volant moteur palliant au problème de l'état de la technique susmentionné, en assurant un bon fonctionnement dans des conditions variées, notamment hivernales.

Dans ce but, l'invention propose un volant à inertie d'un moteur thermique d'un véhicule, ce volant comprenant un anneau d'inertie comprenant un moyen de refroidissement. Ce volant est tel que le moyen de refroidissement comprend des canaux de refroidissement par centrifugation d'air traversant l'anneau, les canaux comprenant une section de passage d'air et des moyens thermosensibles de variation de cette section, les moyens thermosensibles fermant ces sections lorsqu'une température des moyens thermosensibles est en dessous d'un seuil de température bas.

En effet, les moyens thermosensibles des canaux de refroidissement permettent d'agir sur la section de passage d'air de refroidissement, régulant ainsi un débit d'air de refroidissement, et donc le refroidissement. Lorsque la section de passage est fermée en dessous du seuil de température bas, cela évite de refroidir le volant et permet de s'adapter aux situations de roulage dans des conditions climatiques froides. En particulier, lorsque le volant tourne lors des conditions climatiques froides et tant que la température est en dessous du seuil de température bas, le refroidissement est arrêté.

En outre, les canaux traversant l'anneau, lorsque leur section de passage est ouverte ou partiellement ouverte (et donc lorsque la température est au-dessus du seuil de température bas), ils permettent de refroidir le volant au coeur de sa matière, augmentant ainsi l'efficacité du refroidissement, et valorisent ainsi l'anneau en lui rajoutant une fonction de refroidissement en plus de sa fonction d'inertie, de support d'une couronne d'un démarreur ou d'interface avec une cloche d'embrayage.

On notera que la température est la température au niveau des moyens thermosensibles, c'est-à-dire la température de l'anneau par conduction thermique sur le moyen thermosensible, ou la température de l'air traversant les canaux par convection sur le moyen thermosensible, ou une répartition entre la conduction et la convection.

On notera en outre, que cette invention s'applique aussi bien à un volant d'inertie simple (un seul volant) qu'à un double volant amortisseur (deux volants liés élastiquement).

Avantageusement, le seuil de température bas est compris entre 50°C et 250°C.

Selon un mode de réalisation, les moyens thermosensibles comprennent un matériau thermo-déformable formant un clapet.

En effet, ce mode de réalisation est très simple et facile à intégrer dans les canaux. La déformation du clapet provoquée par la chaleur, va progressivement l'ouvrir dès que la température croissante dépasse le seuil bas.

Selon une caractéristique particulière de l'invention, le matériau thermo-déformable est un alliage métallique à mémoire de forme.

Selon un mode de réalisation, les canaux sont orientés radialement à l'anneau.

En effet, l'orientation radiale des canaux permet une bonne centrifugation de l'air contenu dans les canaux lorsque le volant tourne, et permet le refroidissement du volant lorsque la section de passage des canaux est de nouveau libre.

Dans un mode de réalisation, l'anneau d'inertie comporte une surface de friction globalement annulaire, et les canaux sont logés dans une surépaisseur de l'anneau, cette surépaisseur formant un prolongement périphérique de la surface de friction.

En effet, la surface de friction, entre l'anneau et la garniture d'un disque d'embrayage, est la surface la plus chaude du volant d'inertie, et il est avantageux que les canaux de refroidissement soient proches de cette surface la plus chaude pour avoir un refroidissement efficace (écart de température important entre cette zone et l'air traversant les canaux), et aussi pour avoir une bonne sensibilité et une bonne réactivité du moyen thermosensible, étant donné que la température de la surface de friction est un des paramètres qui conditionnent l'adhérence de la garniture du disque d'embrayage sur la surface de friction. Le prolongement périphérique de la surface de friction permet de positionner les canaux et les moyens thermosensibles à proximité de cette surface la plus chaude du volant d'inertie.

En outre, la surépaisseur permet d'avoir des canaux débouchant à chacune de leurs extrémités (amont et aval) tout en étant rectilignes. En effet, la surépaisseur permet une bonne circulation de l'air à l'intérieur des canaux car elle permet de positionner les canaux dans un plan décalé de celui de la surface de friction du volant, mais aussi décalé des plans des surfaces de friction d'un disque d'embrayage associé au volant. Ainsi, le disque d'embrayage n'est plus un obstacle au passage de l'air dans les canaux.

On notera que cette invention s'applique de la même manière aux embrayages multi-disques.

On comprendra dans tout le texte de ce document par extrémité amont et aval, les extrémités des canaux selon le sens du passage de l'air, c'est-à-dire l'extrémité proche du centre de rotation du volant pour l'extrémité amont, et l'extrémité à la périphérie du volant pour l'extrémité aval.

On notera également que le prolongement périphérique de la surface de friction permet de loger les canaux dans une partie du volant où sa vitesse périphérique est la plus grande, ce qui, pour la centrifugation de l'air, est une condition optimale d'efficacité.

Selon un mode de réalisation, cette surépaisseur formant un prolongement périphérique de la surface de friction comprend un grand diamètre extérieur, et un petit diamètre intérieur, et les moyens thermosensibles logés dans les canaux sont positionnés sur ce petit diamètre intérieur.

En effet, les moyens thermosensibles sont ainsi positionnés au plus près de la surface de friction, c'est-à-dire là où la température de la surépaisseur est la plus grande. Cela augmente la sensibilité et le temps de réponse du moyen thermosensible.

Selon un mode de réalisation, les moyens thermosensibles sont insérés en force dans les canaux.

Selon une variante de réalisation, les moyens thermosensibles sont surmoulés dans les canaux.

Selon un mode de réalisation, le volant d'inertie comprend un moyeu de liaison solidaire de l'anneau d'inertie, et est tel que le moyeu comprend des canaux complémentaires de refroidissement par centrifugation d'air le traversant.

En effet, ces canaux complémentaires permettent une circulation d'air supplémentaire.

Selon un mode de réalisation, les canaux complémentaires comprennent un moyen complémentaire thermosensible de variation de leur section de passage.

L'invention porte également sur un véhicule automobile comprenant un groupe motopropulseur avec un embrayage et un volant moteur, le volant moteur étant tel que succinctement décrit ci-dessus.

D'autres caractéristiques et avantages de la présente invention seront mieux compris à l'aide de la description et des dessins non limitatifs parmi lesquels :
- la figure 1 est une vue d'un volant à inertie selon un mode de réalisation de l'invention.
- la figure 2 est une vue partielle agrandie de la figure 1, montrant un canal de refroidissement avec un moyen thermosensible.
- la figure 3 est une vue schématique en coupe d'un volant à inertie selon un mode de réalisation, avec une partie de son environnement.
- la figure 4 est une vue d'un volant à inertie selon un mode de réalisation de l'invention.

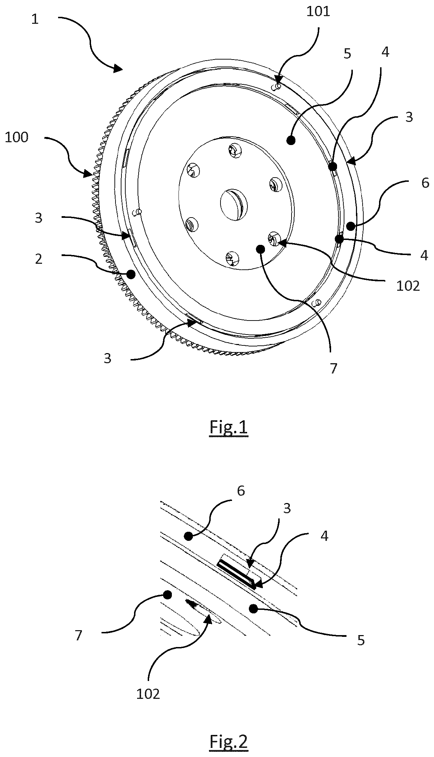

La figure 1 est une vue d'un volant à inertie 1 d'un moteur thermique d'un véhicule selon un mode de réalisation de l'invention. Le volant à inertie 1 comprend un anneau d'inertie 2. Cet anneau d'inertie 2 comprend un moyen de refroidissement sous la forme de canaux de refroidissement 3 par centrifugation d'air. Ces canaux 3 traversent l'anneau 2, et comprennent une section de passage d'air et des moyens thermosensibles 4 de variation de cette section. Les moyens thermosensibles 4 ferment ces sections lorsqu'une température des moyens thermosensibles 4 est en dessous d'un seuil de température bas.

Ce seuil de température bas provoquant la fermeture des sections de passage d'air lorsque la température des moyens thermosensibles 4 est en dessous de ce seuil, est compris entre 50°C et 250°C.

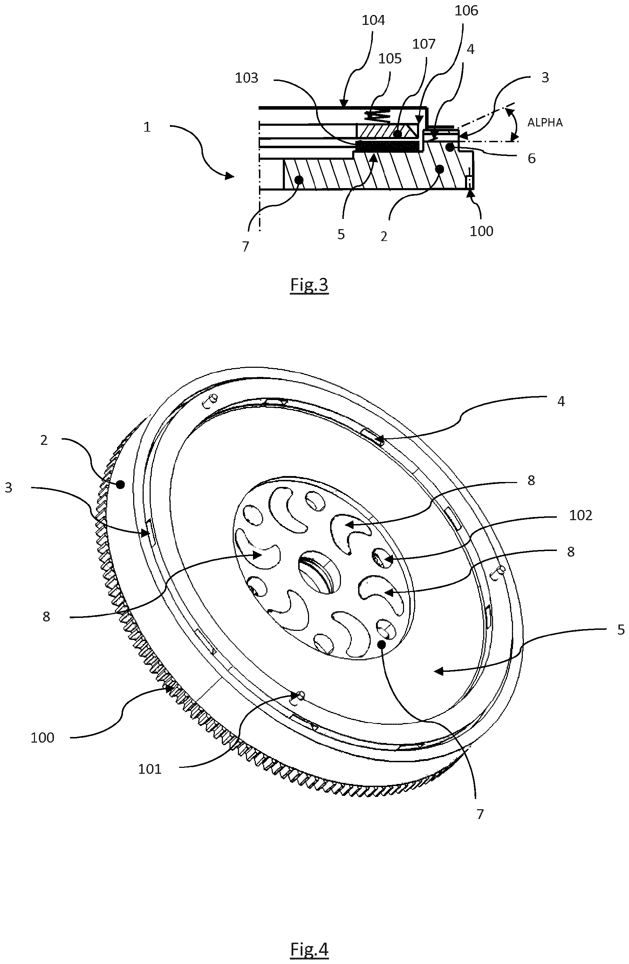

En effet, des mesures de montée en température d'un volant à inertie dans le cadre d'un essai du type « suivi de file », c'est-à-dire un essai de démarrage et arrêt répétés dans un embouteillage, ont montré que la température de l'air autour du volant à inertie atteint une valeur de 195°C lorsque le volant d'inertie atteint une température de 330°C et un plateau presseur (qui sera décrit en figure 3) atteint une température de 390°C. Ces valeurs sont des valeurs critiques pour le fonctionnement d'un embrayage en contact avec une surface de friction 5 Dès que la température des moyens thermosensibles 4 est au-dessus du seuil, les sections de passage d'air sont donc ouvertes pour refroidir le volant à inertie 1, de sorte d'éviter la température critique de 330°C du volant à inertie 1.

A l'inverse, les moyens thermosensibles 4 sont conçus pour refermer ou réduire la section de passage lorsque la température du volant à inertie et/ou de l'air traversant les canaux 3 redescend en dessous de ce seuil, de manière à éviter des températures basses du volant à inertie 1 dans des conditions hivernales.

En effet, lorsque la température est en dessous de ce seuil bas (par exemple, en situation de roulage dans des conditions climatiques froides ou après un arrêt prolongé), on observe une limitation de la transmission du couple par un phénomène de patinage à froid d'un disque de friction (ou disque d'embrayage). Notamment, des essais en conditions froides, ont montré qu'avec des températures négatives, par exemple de -15°C, un couple maximum transmissible par le disque de friction peut être réduit de 10 à 20%.

En outre, notamment pour les moteurs diesel, le volant à inertie 1 peut comprendre deux masses liées entre elles par des ressorts. Une des masses est solidaire d'un vilebrequin et l'autre masse est solidaire d'une transmission, les deux étant reliées par des taquets, un roulement à billes et des ressorts. Cela constitue un dispositif d'amortissement absorbant les trop fortes variations d'énergie cinétique, réduisant ainsi les sollicitations en torsion de la transmission. Ces ressorts sont logés dans des cavités garnies de graisse. Dans des conditions de température très basse, notamment en dessous de 0°C, cette graisse se fige et peut entraver le bon fonctionnement du volant d'inertie. Il est donc utile de permettre à l'embrayage de rapidement atteindre une plage de température adéquate au bon fonctionnement du volant d'inerte, comme par exemple supérieure à 0°C, préférentiellement supérieure à 40°C.

En fonctionnement, la rotation du volant à inertie 1 a pour effet de générer une circulation forcée par centrifugation de l'air à travers les canaux 3 favorable à un échange thermique. L'air se réchauffe ainsi par convection le long des canaux pour se faire éjecter par centrifugation à la périphérie du volant d'inertie 1, les moyens thermosensibles régulant le débit de l'air en fonction de la température du volant à inertie et/ou de l'air.

Les moyens thermosensibles 4 comprennent un matériau thermo-déformable formant un clapet. Le matériau thermo-déformable est par exemple un alliage métallique à mémoire de forme, couramment désigné par l'acronyme AMF, permettant d'alterner entre deux formes préalablement mémorisées lorsque sa température varie autour d'une température critique, à savoir le seuil de température bas. Il existe des alliages connus présentant ces propriétés, comme les alliages Cu-AI-Ni, Cu-Al-Zn ou Ni-Mn-Ga qui sont des alliages utilisables pour cette invention.

Les canaux 3 sont orientés radialement à l'anneau 2, de façon a assurer la centrifugation de l'air contenu dans ces canaux 3. Un canal peut former un angle d'inclinaison de 0 à 30 degrés par rapport au rayon de l'anneau 2 qui le traverse. Ils sont ici au nombre de 10, mais peuvent être compris entre 2 et 30. Le fait d'augmenter leur nombre permet d'augmenter le potentiel de refroidissement du moyen de refroidissement.

La figure 1 montre en outre une couronne de démarrage 100 solidaire de l'anneau 2, qui peut être rapportée fixement sur l'anneau 2, un moyeu 7 solidaire de l'anneau 2 et permettant un interface avec un vilebrequin du moteur thermique, des trous de fixation 102 traversant le moyeu 7 axialement et permettant le passage de vis de fixation qui réalisent l'assemblage du moyeu 7 sur le vilebrequin. On notera également les vis ou goujons 101, qui servent de fixation pour l'assemblage d'une cloche d'embrayage sur l'anneau 2.

L'anneau d'inertie comporte la surface de friction 5 globalement annulaire, et les canaux 3 sont logés dans une surépaisseur 6 de l'anneau 2, cette surépaisseur 6 formant un prolongement périphérique de la surface de friction 5. Cette surface de friction se trouve alors délimitée à sa périphérie par la surépaisseur 6, et en son centre par le moyeu 7.

Les moyens thermosensibles 4 sont logés dans l'extrémité amont des canaux 3. Il est en effet avantageux que les moyens thermosensibles 4 soient proches de la surface de friction 5, cette surface étant une zone la plus chaude du volant à inertie 1, pour avoir un refroidissement efficace (écart de température important entre cette zone et l'air traversant les canaux), et aussi pour avoir une bonne sensibilité et une bonne réactivité du moyen thermosensible, étant donné qu'une température de la surface de friction 5 est un des paramètres qui conditionnent l'adhérence de la garniture d'un disque d'embrayage sur la surface de friction 5.

La figure 2 montre un canal 3 dans la surépaisseur 6 qui est partiellement obturé par le moyen thermosensible 4 qui a ici une forme de clapet. Ce clapet est un volet commandé par l'alliage à mémoire de forme, qui sous l'action de l'élévation de la température du volant à inertie 1 et/ou de l'air, va ouvrir le volet. Le volet peut être l'alliage à mémoire de forme lui-même. Le moyen thermosensible 4 est inséré en force dans le canal 3, en étant bloqué par un ajustement serré entre le moyen thermosensible 4 et la section de passage. En variante, le moyen thermosensible 4 est surmoulé dans le canal 3, lors d'une réalisation par fonderie de l'anneau 3.

La figure 3 est une vue schématique en coupe du volant à inertie 1 selon un mode de réalisation. Le moyeu 7, l'anneau 2 et la surépaisseur 6 sont réalisés en une seule pièce, par fonderie par exemple. La couronne de démarrage 100 est rapportée sur le volant à inertie 1. Y est représenté un canal 3 en coupe, et le clapet thermosensible 4 qui est un volet avec un angle d'inclinaison ALPHA par rapport à l'axe du canal 3. Cet angle ALPHA va évoluer avec la température du volant à inertie et/ou de l'air, pour s'ouvrir ou se fermer selon que l'on est respectivement au-dessus du seuil de température bas ou au-dessous.

Cette figure montre le disque d'embrayage 103 en position sur la surface de friction 5, ce disque d'embrayage 103 étant recouvert de matériau de friction sur ses deux faces en contact, respectivement, avec la surface de friction 5 du volant à inertie 1 et une autre surface de friction sur le plateau presseur 107, le plateau presseur 107, un mécanisme de pression 105, et la cloche d'embrayage 104 fixée sur l'anneau 2 par les goujons 101.

Le plateau presseur est commandé par un mécanisme de commande type levier avec une butée d'embrayage et un diaphragme (non représentés), le levier prenant appui sur un carter d'embrayage (non représenté). Le carter d'embrayage comprend essentiellement une paroi formant une enceinte logeant le volant à inertie 1, la cloche d'embrayage 104, le disque d'embrayage 103, le plateau presseur 107. Le volant à inertie 1 et le plateau presseur 107 sont solidaires en rotation du vilebrequin, et sont donc indexés en rotation l'un par rapport à l'autre. Le disque d'embrayage 100 est lui solidaire en rotation d'un arbre primaire d'une boîte de vitesses fixée sur le carter d'embrayage.

Classiquement, le levier bascule autour d'une articulation pivot et/ou rotule portée par le carter d'embrayage, poussant le diaphragme via la butée d'embrayage, diaphragme qui vient alors comprimer le plateau presseur 107 en le translatant contre le mécanisme de pression 105, libérant ainsi le disque d'embrayage 103 et désaccouplant l'arbre primaire du vilebrequin. Ce principe de fonctionnement est bien connu en soi de l'homme de métier.

La surépaisseur 6 permet judicieusement de désaffleurer la section amont du canal 3 de l'épaisseur de la garniture du disque de friction 100. De la sorte, l'air contenu dans l'enceinte du carter d'embrayage peut librement passer à travers la section amont du canal 3.

Dans une variante, et si nécessaire, on pratique une échancrure en vis-à-vis de la section amont du canal 3 dans le plateau presseur 107. En effet, le plateau presseur 107 est toujours à la même position angulaire par rapport au volant d'inertie 1 car ils sont solidaires en rotation l'un à l'autre (via la cloche d'embrayage). Cette échancrure 107 se trouvera donc toujours en vis-à-vis de la section amont du canal 3, ce qui n'aurait pas été possible si cette échancrure était pratiquée dans l'épaisseur de la garniture du disque d'embrayage 103.

La figure 4 est un volant à inertie selon un mode de réalisation. Le volant à inertie 1 comprend le moyeu de liaison 7 solidaire de l'anneau d'inertie 2, et le moyeu 7 comprend des canaux complémentaires 8 de refroidissement par centrifugation d'air le traversant. Ces canaux complémentaires 8 sont dotés d'un moyen complémentaire thermosensible de variation de leur section de passage, dont la définition technique est identique à celle des moyens thermosensibles 4.

## Revendications

1. Volant à inertie (1) d'un moteur thermique d'un véhicule, ledit volant (1) comprenant un anneau d'inertie (2) comprenant un moyen de refroidissement, **caractérisé en ce que** ledit moyen de refroidissement comprend des canaux de refroidissement (3) par centrifugation d'air traversant ledit anneau (2), lesdits canaux (3) comprenant une section de passage d'air et des moyens thermosensibles (4) de variation de ladite section, lesdits moyens thermosensibles (4) fermant lesdites sections lorsqu'une température desdits moyens thermosensibles (4) est en dessous d'un seuil de température bas.

2. Volant à inertie selon la revendication 1, **caractérisé en ce que** lesdits moyens thermosensibles (4) comprennent un matériau thermo-déformable formant un clapet.

3. Volant à inertie selon la revendication 2, **caractérisé en ce que** ledit matériau thermo-déformable est un alliage métallique à mémoire de forme.

4. Volant à inertie selon l'une des revendications précédentes, **caractérisé en ce que** lesdits canaux (3) sont orientés radialement audit anneau (2).

5. Volant à inertie selon la revendication 4, ledit anneau d'inertie comportant une surface de friction (5) globalement annulaire, **caractérisé en ce que** lesdits canaux (3) sont logés dans une surépaisseur (6) dudit anneau (2), ladite surépaisseur (6) formant un prolongement périphérique de ladite surface de friction (5).

6. Volant à inertie selon l'une des revendications précédentes, **caractérisé en ce que** lesdits moyens thermosensibles (4) sont insérés en force dans lesdits canaux (3).

7. Volant à inertie selon l'une des revendications 1 à 5, **caractérisé en ce que** lesdits moyens thermosensibles (4) sont surmoulés dans lesdits canaux (3).

8. Volant à inertie selon l'une des revendications précédentes, ledit volant d'inertie comprenant un moyeu de liaison (7) solidaire dudit anneau d'inertie (2), **caractérisé en ce que** ledit moyeu (7) comprend des canaux complémentaires (8) de refroidissement par centrifugation d'air le traversant.

9. Volant à inertie selon la revendication 8, **caractérisé en ce que** lesdits canaux complémentaires (8) comprennent un moyen complémentaire thermosensible de variation de leur section de passage.

10. Véhicule automobile comprenant un groupe motopropulseur avec un embrayage et un volant moteur, **caractérisé en ce que** le volant moteur est conforme à l'une des revendications précédentes.
